# EUROPEAN PATENT SPECIFICATION

(11) **EP 0 495 252 B1**
(45) Date of publication and mention of the grant of the patent: **04.09.1996**
(21) Application number: 91200058.5
(22) Date of filing: 14.01.1991
(51) Int. Cl.: G06K 19/07

(54) **Memory card and switching system suitable for using the same**
Speicherkarte und zugehöriges Anschlusssystem
Carte à mémoire et système de commutation adapté pour son utilisation

(43) Date of publication of application: 22.07.1992
(73) Proprietor: ALCATEL BELL Naamloze Vennootschap, B-2018 Antwerpen 1 (BE); ALCATEL N.V., NL-2288 BH Rijswijk (NL)
(72) Inventor: Bijl, Jacobus Cornelis, NL-2568 KH - Den Haag (NL); Jongen, Jacobus Johannes, NL-2552-HM - Den Haag (NL); Keyzer, Hendrik Willem, NL-2361-EE- Warmond (NL); Smeets, Johannes Cornelis Josephus, NL-2612-GJ- Delft (NL)

(56) References cited:
- FR-A- 2 602 893
- PATENT ABSTRACTS OF JAPAN vol. 13, no. 389 (P- 925)(3737), 29 August 1989; & JP - A - 1137395 (HITACHI LTD.) 30.05.1989
- PATENT ABSTRACTS OF JAPAN vol. 14, no. 263 (E- 938)(4206), 7 June 1990; & JP - A - 281556 (MITSUBISHI ELECTRIC CORP.) 22.03.1990

## Description

The present invention relates to a memory card as set forth in the preamble of claim 1 and to a programmable switching system for the same.

Memory cards are known in which are stored data from which user information is presented on a display, e.g., a screen, after the memory card has been inserted into an input device. The data may be present in a form which permits user guidance by corresponding displays on a screen etc.

Recently, Eurocheque cards in the form of memory cards containing a special country code have come onto the market. The data are stored there in a magnetic strip . After insertion of the EC card into an automatic device the latter reads the country code and switches to the corresponding language which is then outputted as information text. The texts must be stored in the automatic device in the various languages (see "Funkschau", No. 16, 1990, page 35).

Furthermore, it is known to equip local exchanges with speech memories, e.g., in the form of drums with magnetic tracks etc., which contain speech information that can be selected and outputted to the subscriber by dialling an associated telephone number. Examples of such speech information are speaking-clock announcements, weather forecasts, travel information, etc.

In all known cases the centrally stored information can be called up only in a few predetermined languages.

It is the object of the present invention to give the user of an automatic device with speech-output capability or in switching systems with speech-output capability, e.g., a telephone, information which is tailored to the user and can be outputted in his national language without the need for previous storage or information in a central facility.

This object is achieved by a memory card as set forth in claim 1. According to a preferred embodiment of the invention, if the memory card is used in a programmable switching system, user-specific information or user-guidance information can be read out to a speech output device, i.e., usually the telephone receiver. The user is thus given the information essential to him in his, possibly selected, native language, regardless of what is stored in a central memory. If used in a programmable switching system the memory card may include a memory containing a program by which the service features of the switching system can be determined or extended.

Further advantageous details of the invention are defined in the subclaims and will now be described with reference to the embodiments illustrated in the accompanying drawings, in which:
- Fig. 1: is a top view of a memory card with a block diagram of the integrated circuits contained therein;
- Fig. 2: shows an automatic device with an input device and a speech output device;
- Fig. 3: is a circuit diagram of a switching system in the form of a private branch exchange system including input devices for memory cards, and
- Figs. 4 to 7: show different embodiments of a memory card.

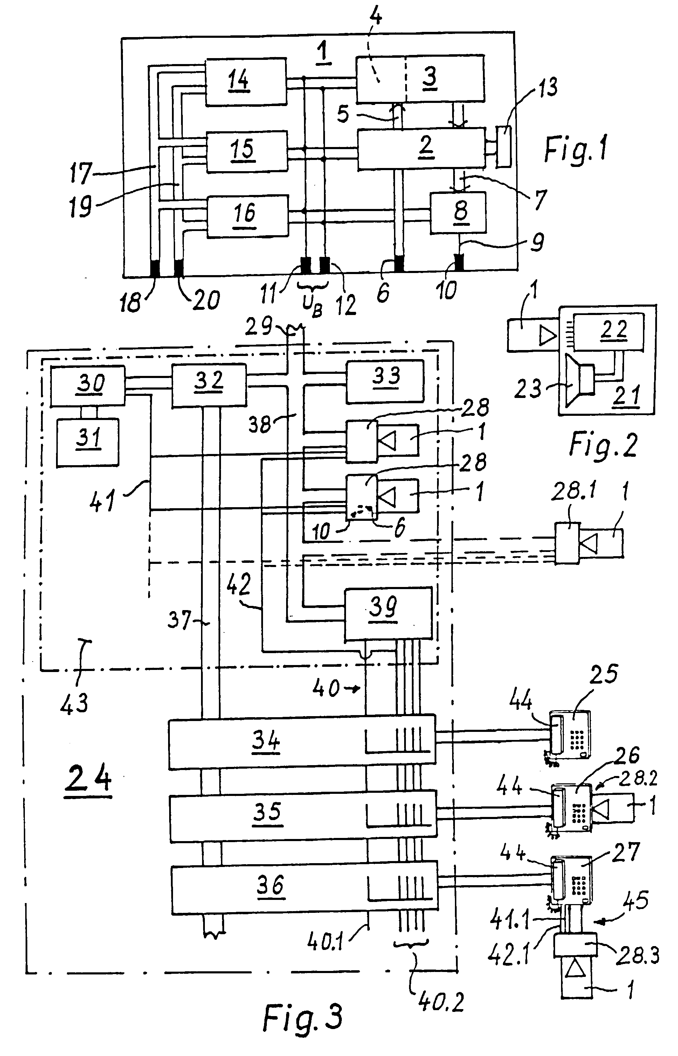

Fig. 1 is a schematic diagram of a memory card 1 with an integrated speech generator 2 and an associated text memory 3 in which a vocabulary is stored under the form of data to be outputted via the speech generator 2. The speech generator 2 contains a speech-element memory in which the speech elements are stored digitally, e.g., in pulse-code-modulated form, the necessary phonemes being preferably stored individually. The phonemes are combined into an output text by suitable synthesis with the aid of a program stored, for example, in the text memory 3 or in a separate memory. The text memory 3 may include a text output control 4 which is controllable via a control line 5 connected to an externally accessible terminal 6.

The output 7 of the speech generator 2 is connected via a filter 8 and an output line 9 to an externally accessible terminal 10. At this terminal 10 output information is available as analog speech signals.

The various circuits on the memory card are supplied with a supply voltage U_{B} via externally accessible terminals 11 and 12.

The memory card 1 includes an integrated clock generator 13 for generating a clock signal for the circuits on the memory card.

The memory card 1 may include one or more data memories 14, 15, and 16. These contain, for example, the software or additional software, e.g., a program for activating further service features for a switching system or device suitable for use of the memory card 1, as will be described later. The data memories 14, 15, 16 are connected to an address bus 17, connected to an externally accessible terminal 18, and to a data bus 19, which is connected to an externally accessible terminal 20.

Fig. 2 shows the use of a memory card 1 in an automatic device 21 which has a suitable input and control unit 22 and a speech output device 23. If the memory card 1 is inserted into the input device a supply voltage is applied to the terminals 11 and 12. The control unit 22 activates the speech generator 2 via the terminal 6. The text available at the terminal 10 is passed to the speech output device 23, if necessary after amplification of the analog signals, and outputted to the user. The automatic device 21 may be provided, for example, at or in a bank counter for providing information on selected services and/or for user guidance. If a data memory 14, 15, 16 is present the program stored therein may be read out by the automatic device 21 and written into an internal memory under control of the control unit 22 for further processing. In this manner further service features of the automatic device or of units connected with the latter, e.g., data terminals or data processing equipment, can be activated.

A preferred application of the memory card 1 is in a programmable switching system as is shown schematically and by way of example in Fig. 3 in the form of a private branch exchange system or home exchange system.

The switching system consists of a central unit 24, which may include at least one input device 28 for a memory card 1, and a plurality of terminal units 25, 26, and 27 connected to the central unit. The latter may be provided with at least one trunk 29 by means of which it can be connected to at least one local exchange and/or to other private branch exchanges and/or to data processing systems, etc. It may then serve as an interface between the terminal units 25, 26, 27 and further systems.

The central unit 24 includes a microprocessor 30 with an integrated program memory and an associated data memory 31, which contains, for example, control data for the operation of the system. It further includes a control unit 32 which is controlled by the microprocessor 30, a data memory 33 designed as a random-access memory and connected to the control unit 32, a number of terminal control units 34, 35, 36 depending on the number and type of the terminal units 25, 26, 27 and connected via a common control bus ("daisy bus") 37 to the control unit 32, the input devices 28 which are connected via a data bus 38 to the control unit 32 and the data memory 33, and a dial control unit 39 connected to the data bus 38. The dial control unit 39 contains, for example, a dual-tone multifrequency (DTMF) transmitter/receiver and a dial-tone generator and is connected via a communications bus (audio bus) 40, containing, for example, a dial-tone wire 40.1 and four speech wires 40.2, to the terminal control units 34, 35, and 36, to which the terminal units 25, 26, and 27, respectively, are connected or connectable.

A control line 41 links the microprocessor 30 to the inpu devices 28, and a speech output line 42 connects the input devices 28 to one of the speech wires 40.2. With a memory card 1 inserted in an input device 28 its terminals 6 and 10 are connected to the control line 41 and the speech output line 42 respectively.

The switching system described is preferably modular in construction, with the microprocessor 30, the associated data memory 31, the control unit 32, the data memory 33, and possibly also the dial control unit 39 arranged on a common board 43 (represented by a dash-and-dot line). The input devices 28 may each be constituted by a socket connector which may also be located on the common board 43.

The terminal control units 34, 35, 36 are advantageously designed as separate components and can be plugged into the board 43, so that they are easy to exchange or replace.

The basic hardware and software are designed so that use of a number of internal lines and at least one external line is possible, and the software stored in, e.g., the data memory 33 comprises data for the following basic facilities or services features, for example:
- automatic signal detection (e.g., of the signals entered through a dial or through keys);
- internal call;
- outgoing call;
- incoming call;
- call transfer.

By inserting a memory card 1 with data memories 14, 15, 16 which contain software for additional service features, the switching system can be upgraded considerably. After insertion of the memory card 1 into an input device 28, these data, in the form of an additional operating software, are read by the control unit 32 and processed in the same manner as the system software. The additional service features are then available to the user. If a memory card 1 with a text memory 3 and a speech generator 2 is used, the system is extended by the service feature "speech output in the form of user information" or "speech output in the form of user guidance". The speech output takes place, for example, after removal of the telephone receiver 44 from a terminal unit 25, 26, 27, automatically or after entry of a code word, e.g., a sequence of digits or depression of a "help" key. Via the control line 41, the microprocessor 30 then causes the speech generator 2 to output a text as an analog signal sequence onto the output line 9 of the memory card. This signal sequence is transferred over the speech output line 42 and the speech wires 40.2 of the audio bus to the telephone receiver 44. The information indicates, for example, which service feature the user may dial or which service feature he or she has already dialled. User-guidance information may include a request to enter a further code word, and after execution, further user information may be put out. A special advantage is that the service features of the system, the additional service features, and the associated user information or user-guidance information can be stored on one and the same memory card in the user's national language or in an easily understandable language.

Instead of or in addition to the input device 28 incorporated in the central unit 24, an input device in the form of a peripheral device 28.1 may be connected to the data bus 38, the control line 41, and the speech output line 42, thus being associated with the central unit 24.

It is also possible to provide a terminal unit, e.g., the terminal unit 26, with an integrated input device 28.2 or to associate an input device 28.3 as a peripheral device with a terminal unit, e.g., the terminal unit 27, and connect it via a data line 45 to this terminal unit 27. In the latter case, the input device 28.3 is connected to a control unit in the terminal unit 27 by a control line 41.1, and speech output is effected via a speech output line 42.1 between the input device 28.3 and the terminal unit 27. If input devices are associated with the terminal units, the software of the data memories of the memory cards to be inserted is so designed that after entry of the same and activation of the terminal unit, e.g., by removal of the telephone receiver or by depression of a special key or by entering a special input code in another manner, the associated telephone has additional service features. For example, a personal short code may be assigned to the telephone, and/or the speech output from the telephone receiver 44 is in the form of user guidance, etc.

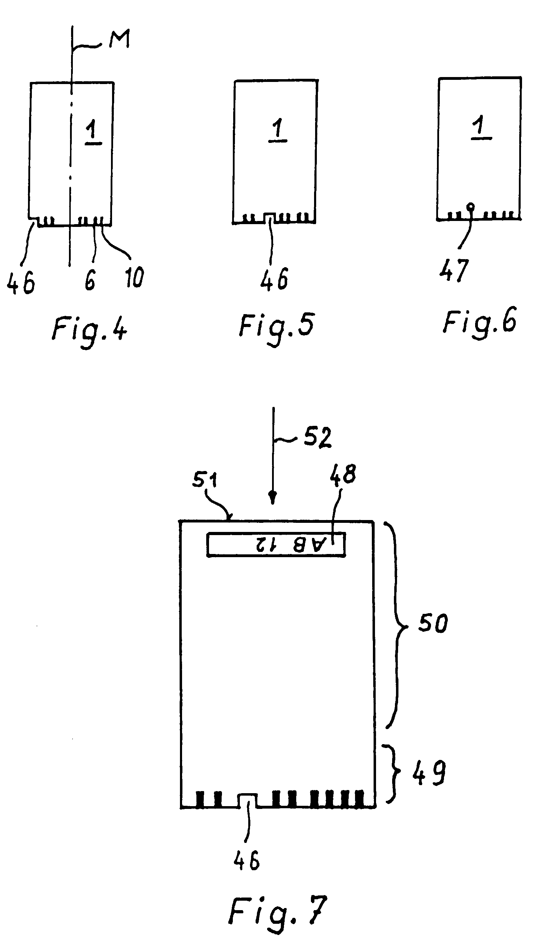

According to an advantageous aspect of the invention, the memory card 1 may be designed so that it can be inserted into an input device 28 in a predetermined position only. For example, the memory card 1 may have a recess 46 in the form of a stamped-away corner disposed asymmetrically with respect to the center line M as shown in Fig. 4, a recess as shown in Fig. 5, or a cutout 47 of circular-, triangular, or polygonal shape as shown in Fig. 6. It is also possible to provide two or more recesses 46 and/or cutouts 47.

According to a further advantageous aspect of the invention, shown by way of example in Fig. 7, a display 48, preferably an LCD display, is provided on one or both flat sides of the memory card 1 in a region 50 lying outside the insert region 49 of the memory card 1. Preferably, the display 48 is located in the region of the edge 51 opposite the terminals 6, 10, 11, 12, 18, 20. The display is advantageously readable in the direction of view 52 from the edge 51 if the memory card 1 is inserted into an input device 28 in such a position that the edge 51 faces the user. The direction of indication may be controlled by software, e.g., in such a way that, if the memory card 1 is inserted as just described, the direction of indication is as just described, and if the memory card is inserted from above, the direction of indication appears reversed by 180^{o}. On the display 48, after insertion of the memory card into an input device 28, user information may be presented as a word and/or a number or as a code etc. The data for this may come from the text memory of the memory card 1 or from another data memory 14, 15, 16 of the memory card 1 or from a data or program memory of an external unit, e.g., a terminal unit 26, 27, or a system, e.g., 24. In this manner, user guidance can be provided or existing service features, service features entered with the memory card 1, unavailable service features, or a person-specific code etc., can be displayed. Controlled by suitable software, the display may be in the form of a word and/or a number or of a sequence of words and/or numbers. In the case of sequences of words or long displays, the words may be displayed, one after the other or at least in part, in the form of a moving screen.

## Claims

1. Memory card including at least one data memory containing data of a code word and/or a program which, if the memory card is inserted into an input device, are able to be processed by a control unit associated with the input device, said control unit initiating control operations resulting therefrom and the memory card being capable of outputting analog speech signals associated with the code word or the program to a speech output device, **characterized in** that the memory card (1) contains a speech generator (2) connected to the data memory (14, 15, 16) or to a separate text memory (3) provided on the memory card, and that the data memory (14, 15, 16) or the text memory (3) contains a program for generating at least one memory-card-specific vocabulary by which the speech elements of the speech generator (2) can be activated via an external control unit (32) in such a way that analog speech signals for text output in the form of user information, particularly in the form of an input acknowledgement and/or user guidance, can be outputted onto an output line (9) of the memory card (1).

2. A memory card as claimed in claim 1, characterized in that it has the following terminals, which can be contacted by inserting it into the input device:
- two terminals (11, 12) for a supply voltage (UB);
- a terminal (18) for an internal address bus (17);
- a terminal (20) for an internal data bus (19);
- a terminal (6) for a control line (5) of the speech generator (2), and
- a terminal (10) for the speech output line (9).

3. A memory card as claimed in claim 1, characterized in that a program for service features or operating software of a digital programmable switching system is stored or storable in the data memory (14; 15; 16), and that the data memory (14; 15; 16) is connected to two externally accessible terminals (18, 20) of the memory card via an address bus (17) and a data bus (19), respectively.

4. A memory card as claimed in any one of claims 1 to 3, characterized in that it has at least one cutout (47) and/or recess (46) which are located so that the memory card (1) is insertable into the input device (28) in a predetermined position only.

5. A memory card as claimed in any one of claims 1 to 4, characterized in that a display (48) is provided on at least one flat side of the memory card (1) outside the inserting region (49), and that the display (48) is drivable by data internal and/or external to the memory card.

6. A memory card as claimed in claim 5, characterized in that the display (48) is in the form of user-guidance information and/or service-feature information and/or a person-specific code.

7. A memory card as claimed in claim 5 or 6, characterized in that the display is in the form of a sequence of words and/or numbers.

8. A memory card as claimed in any one of claims 5 to 7, characterized in that the display is, at least in part or temporarily, in the form of a moving screen.

9. A memory card as claimed in any one of claims 5 to 8, characterized in that the display (48) is provided in the region (50) of the edge (51) opposite the terminals (6, 10, 11, 12, 18, 20).

10. A memory card as claimed in claim 9, characterized in that the display is readable in the direction of view (52) from the edge (51).

11. A memory card as claimed in any one of claims 5 to 10, characterized in that depending on the direction of insertion of the memory card into the input device (28), the direction of the symbols presented on the display (48) is reversible by 180° under software control.

12. Programmable switching system for a memory card as claimed in any one of claims 1 to 11, particularly private branch exchange system or home exchange system, comprising the following units:
- at least one input device for inserting the memory card into it and having contact terminals for a data bus, for an address bus, and for a supply voltage for the memory card;
- a central unit comprising
- a microprocessor,
- a control unit controlled by the microprocessor, and
- a data memory connected via a control bus to the microprocessor or the control unit, and
- a plurality of terminal units which are connected via an audio bus to the central unit, and at least one of which is designed as or includes a speech output device,
wherein after insertion of the memory card the control unit causes the data stored in the memory card to be written into the data memory of the central unit, which data determine the service features of the switching system,
**characterized in** that the input device (28) has a contact connected to a speech wire of the audio bus (40) and serving to make contact to the output line (9) of the memory card (1) and a contact connected to the control unit (32) and serving to make contact to the control line (5) of the memory card (1), which control line is connected to the speech generator (2), and that after insertion of the memory card (1), the stored data of the memory card (1) are read, whereby the switching system is programmed so that upon start-up of a speech output device or a terminal unit (25, 26, 27) equipped with a speech output device or after insertion of a code word by the user, the control unit (32) activates the speech generator (2), which outputs analog speech signals in the form of user information via the output line (9) of the memory card (1), the associated contact (10), and the connected speech wire (40.2) to the connected speech output device (44).

13. A switching system as claimed in claim 12, characterized in that the user information put out includes a request to enter a further code word, and that after entry of the further code word, the control unit (32) causes the speech generator (2) to output further user information to the connected speech output device (44).

14. A switching system as claimed in claim 12 or 13, characterized in that the program or one of the programs stored in the text memory (3) or the data memory (14, 15, 16) of the memory card (1) containing the speech generator (2) contains data for the necessary service features and/or for additional service features of the switching system.

15. A switching system as claimed in any one of claims 12 to 14, characterized in that the input device (28) is integrated with the central unit (24) of the system or contained in a peripheral device (28.1) electrically connected to said central unit (24).

16. A switching system as claimed in any one of claims 12 to 14, characterized in that the input device (28.2) is integrated with a terminal unit (26) or is a peripheral device (28.3) electrically connected with a terminal unit (27).

17. A switching system as claimed in any one of claims 12 to 16, characterized in that it is a private branch exchange having at least one port (29) for a trunk to a local exchange and/or to another private branch exchange.

## Patentansprüche

1. Speicherkarte, die mindestens einen Datenspeicher einschließt, der Daten eines Codewortes und/oder eines Programms enthält, die, wenn die Speicherkarte in ein Eingabegerät eingesteckt wird, von einer zum Eingabegerät gehörenden Steuereinheit verarbeitet werden können, wobei die Steuereinheit daraus resultierende Steueroperationen einleitet und die Speicherkarte in der Lage ist, analoge Sprachsignale, die zu dem Codewort oder dem Programm gehören, an ein Sprachausgabegerät auszugeben,
**dadurch gekennzeichnet**, daß die Speicherkarte (1) einen Sprachgenerator (2) enthält, der mit dem Datenspeicher (14, 15, 16) oder mit einem getrennten Textspeicher (3), der auf der Speicherkarte (1) bereitgestellt ist, verbunden ist, und daß der Datenspeicher (14, 15, 16) oder der Textspeicher (3) ein Programm enthält, um mindestens ein speicherkartenspezifisches Vokabular zu erzeugen, mit dem die Sprachelemente des Sprachgenerators (2) über eine externe Steuereinheit (32) so aktiviert werden können, daß analoge Sprachsignale für eine Textausgabe in Form von Benutzerinformationen, insbesondere in Form einer Eingabebestätigung und/oder Benutzerführung, auf eine Ausgangsleitung (9) der Speicherkarte (1) ausgegeben werden können.

2. Speicherkarte wie in Anspruch 1 beansprucht, dadurch gekennzeichnet, daß sie die folgenden Anschlüsse hat, mit denen ein Kontakt hergestellt werden kann, indem sie in das Eingabegerät eingesteckt wird:
- zwei Anschlüsse (11, 12) für eine Versorgungsspannung (U_{B}) ;
- einen Anschluß (18) für einen internen Adreßbus (17);
- einen Anschluß (20) für einen internen Datenbus (19);
- einen Anschluß (6) für eine Steuerleitung (5) des Sprachgenerators (2) und
- einen Anschluß (10) für die Sprachausgabeleitung (9).

3. Speicherkarte wie in Anspruch 1 beansprucht, dadurch gekennzeichnet, daß ein Programm für Dienstleistungsmerkmale oder Betriebssoftware eines digitalen, programmierbaren Vermittlungssystems in dem Datenspeicher (14, 15, 16) gespeichert ist oder gespeichert werden kann und daß der Datenspeicher (14, 15, 16) über einen Adreßbus (17) beziehungsweise einen Datenbus (19) mit zwei extern zugänglichen Anschlüssen (18, 20) der Speicherkarte (1) verbunden ist.

4. Speicherkarte wie in einem der Ansprüche 1 bis 3 beansprucht, dadurch gekennzeichnet, daß sie mindestens einen Ausschnitt (47) und/oder eine Vertiefung (46) hat, die so positioniert sind, daß die Speicherkarte (1) nur an einer vorher festgelegten Stelle in das Eingabegerät (28) eingesteckt werden kann.

5. Speicherkarte wie in einem der Ansprüche 1 bis 4 beansprucht, dadurch gekennzeichnet, daß eine Anzeige (48) an zumindest einer flachen Seite der Speicherkarte (1) außerhalb des Einsteckbereichs (49) bereitgestellt ist und daß die Anzeige (48) von speicherkarteninternen und/oder speicherkartenexternen Daten gesteuert werden kann.

6. Speicherkarte wie in Anspruch 5 beansprucht, dadurch gekennzeichnet, daß die Anzeige (48) in Form von Benutzerführungsinformationen und/oder Dienstleistungsmerkmals-Informationen und/oder einem personenspezifischen Code ist.

7. Speicherkarte wie in Anspruch 5 oder 6 beansprucht, dadurch gekennzeichnet, daß die Anzeige (48) in Form einer Folge von Wörtern und/oder Zahlen ist.

8. Speicherkarte wie in einem der Ansprüche 5 bis 7 beansprucht, dadurch gekennzeichnet, daß die Anzeige (48) zumindest teilweise oder zeitweilig in Form einer Laufschriftanzeige ist.

9. Speicherkarte wie in einem der Ansprüche 5 bis 8 beansprucht, dadurch gekennzeichnet, daß die Anzeige (48) in dem Bereich (50) der Kante (51) gegenüber den Anschlüssen (6, 10, 11, 12, 18, 20) bereitgestellt ist.

10. Speicherkarte wie in Anspruch 9 beansprucht, dadurch gekennzeichnet, daß die Anzeige (48) in der Blickrichtung (52) von der Kante (51) lesbar ist.

11. Speicherkarte wie in einem der Ansprüche 5 bis 10 beansprucht, dadurch gekennzeichnet, daß sich die Richtung der auf der Anzeige (48) dargestellten Symbole in Abhängigkeit von der Richtung, in der die Speicherkarte (1) in das Eingabegerät (28) eingesteckt wird, softwaregesteuert um 180° umkehren läßt.

12. Programmierbares Vermittlungssystem für eine Speicherkarte, wie in einem der Ansprüche 1 bis 11 beansprucht, insbesondere ein Nebenstellenanlage-System oder ein System mit eigener Vermittlungsstelle, das die folgenden Einheiten umfaßt:
- mindestens ein Eingabegerät, um die Speicherkarte (1) darin einzustecken, das Kontaktanschlüsse für einen Datenbus, einen Adreßbus und eine Versorgungsspannung für die Speicherkarte (1) hat;
- eine Zentraleinheit, die
- einen Mikroprozessor,
- eine von dem Mikroprozessor gesteuerte Steuereinheit und
- einen Datenspeicher, der über einen Steuerbus mit dem Mikroprozessor oder der Steuereinheit verbunden ist, und
- eine Vielzahl von Anschlußeinheiten, die über einen Audiobus mit der Zentraleinheit verbunden sind und von denen mindestens eine als Sprachausgabegerät ausgelegt ist oder ein Sprachausgabegerät enthält,
umfaßt, wobei die Steuereinheit nach dem Einstecken der Speicherkarte (1) bewirkt, daß die auf der Speicherkarte (1) gespeicherten Daten in den Datenspeicher der Zentraleinheit geschrieben werden, wobei diese Daten die Dienstleistungsmerkmale des Vermittlungssystems bestimmen,
**dadurch gekennzeichnet**, daß das Eingabegerät (28) einen Kontakt, der mit einer Sprechader des Audiobusses (40) verbunden ist und dazu dient, einen Kontakt mit der Ausgangsleitung (9) der Speicherkarte (1) herzustellen, und einen Kontakt, der mit der Steuereinheit (32) verbunden ist und dazu dient, einen Kontakt mit der Steuerleitung (5) der Speicherkarte (1) herzustellen, hat, wobei diese Steuerleitung mit dem Sprachgenerator (2) verbunden ist und die gespeicherten Daten der Speicherkarte (1) nach dem Einstecken der Speicherkarte (1) gelesen werden, wodurch das Vermittlungssystem so programmiert wird, daß die Steuereinheit (32) nach der Inbetriebnahme eines Sprachausgabegeräts oder einer mit einem Sprachausgabegerät ausgestatteten Anschlußeinheit (25, 26, 27) oder nach dem Eingeben eines Codewortes durch den Benutzer den Sprachgenerator (2) aktiviert, der über die Ausgangsleitung (9) der Speicherkarte (1), den zugehörigen Kontakt (10) und die angeschlossene Sprechader (40.2) analoge Sprachsignale in Form von Benutzerinformationen an das angeschlossene Sprachausgabegerät (44) ausgibt.

13. Vermittlungssystem wie in Anspruch 12 beansprucht, dadurch gekennzeichnet, daß die ausgegebenen Benutzerinformationen eine Aufforderung zur Eingabe eines weiteren Codewortes enthalten und daß die Steuereinheit (32) nach der Eingabe des weiteren Codewortes den Sprachgenerator (2) veranlaßt, weitere Benutzerinformationen an das angeschlossene Sprachausgabegerät (44) auszugeben.

14. Vermittlungssystem wie in Anspruch 12 oder 13 beansprucht, dadurch gekennzeichnet, daß das Programm oder eines der Programme, das/die in dem Textspeicher (3) oder dem Datenspeicher (14, 15, 16) der Speicherkarte (1), die den Sprachgenerator (2) enthält, gespeichert ist/sind, Daten für die notwendigen Dienstleistungsmerkmale und/oder für zusätzliche Dienstleistungsmerkmale des Vermittlungssystems enthält/enthalten.

15. Vermittlungssystem wie in einem der Ansprüche 12 bis 14 beansprucht, dadurch gekennzeichnet, daß das Eingabegerät (28) mit der Zentraleinheit (24) des Systems integriert oder in einem Peripheriegerät (28.1) enthalten ist, das elektrisch mit der Zentraleinheit (24) verbunden ist.

16. Vermittlungssystem wie in einem der Ansprüche 12 bis 14 beansprucht, dadurch gekennzeichnet, daß das Eingabegerät (28.2) mit einer Anschlußeinheit (26) integriert oder ein Peripheriegerät (28.3) ist, das elektrisch mit einer Anschlußeinheit (27) verbunden ist.

17. Vermittlungssystem wie in einem der Ansprüche 12 bis 16 beansprucht, dadurch gekennzeichnet, daß es eine Nebenstellenanlage ist, die mindestens eine Anschlußstelle (29) für eine Verbindungsleitung zu einer Ortsvermittlungsstelle und/oder zu einer anderen Nebenstellenanlage hat.

## Revendications

1. Carte mémoire comportant au moins une mémoire de données contenant des données d'un mot code et/ou un programme qui, si la carte mémoire est insérée dans un dispositif d'entrée, peuvent être traités par une unité de commande associée au dispositif d'entrée, ladite unité de commande initialisant les opérations de commande qui en résultent et la carte mémoire étant capable d'émettre des signaux vocaux analogiques associés au mot code ou au programme vers un dispositif vocal de sortie, caractérisée en ce que la carte mémoire (1) contient un générateur vocal (2) connecté à la mémoire de données (14, 15, 16) ou à une mémoire de texte séparée (3) fournie dans la carte mémoire, et en ce que la mémoire de données (14, 15, 16) ou la mémoire de texte (3) contient un programme permettant de générer au moins un vocabulaire spécifique à la carte mémoire par lequel les éléments vocaux du générateur vocal (2) peuvent être activés par le biais d'une unité de commande externe (32) de telle sorte que les signaux vocaux analogiques destinés à la sortie de texte sous la forme d'informations concernant l'utilisateur, en particulier sous la forme d'un accusé de réception d'entrée et/ou un guidage de l'utilisateur, peuvent être émis sur une ligne de sortie (9) de la carte mémoire (1).

2. Carte mémoire selon la revendication 1, caractérisée en ce qu'elle comporte les bornes suivantes, qui peuvent être mises en contact en l'insérant dans le dispositif d'entrée :
- deux bornes (11, 12) pour la tension d'alimentation (U_{B}) ;
- une borne (18) pour un bus d'adresses interne (17) ;
- une borne (20) pour un bus de données interne (19) ;
- une borne (6) pour une ligne de commande (5) du générateur vocal (2), et
- une borne (10) pour la ligne de sortie vocale (9).

3. Carte mémoire selon la revendication 1, caractérisée en ce qu'un programme pour caractéristiques de service ou logiciel d'exploitation d'un système de commutation programmable numérique est stocké ou peut être stocké dans la mémoire de données (14 ; 15 ; 16), et en ce que la mémoire de données (14 ; 15 ; 16) est connectée à deux bornes accessibles par l'extérieur (18, 20) de la carte mémoire par le biais d'un bus d'adresses (17) et un bus de données (19), respectivement.

4. Carte mémoire selon l'une des revendications 1 à 3, caractérisée en ce qu'elle possède au moins une découpe (47) et/ou encoche (46) qui sont situées de telle sorte que la carte mémoire (1) peut être insérée dans le dispositif d'entrée (28) dans une position prédéterminée seulement.

5. Carte mémoire selon l'une des revendications 1 à 4, caractérisée en ce qu'un dispositif d'affichage (48) est fourni sur au moins un côté plat de la carte mémoire (1) hors de la région d'insertion (49), et en ce que le dispositif d'affichage (48) peut être piloté par des données internes et/ou externes à la carte mémoire.

6. Carte mémoire selon la revendication 5, caractérisée en ce que le dispositif d'affichage (48) est sous la forme d'informations concernant les informations de guidage de l'utilisateur et/ou les caractéristiques de service et/ou un code spécifique à une personne.

7. Carte mémoire selon la revendication 5 ou 6, caractérisée en ce que le dispositif d'affichage est sous la forme d'une séquence de mots et/ou de nombres.

8. Carte mémoire selon l'une des revendications 5 à 7, caractérisée en ce que le dispositif d'affichage est, au moins en partie ou temporairement, sous la forme d'un écran mobile.

9. Carte mémoire selon l'une des revendications 5 à 8, caractérisée en ce que le dispositif d'affichage (48) est fourni dans la région (50) du bord (51) opposé aux bornes (6, 10, 11, 12, 18, 20).

10. Carte mémoire selon la revendication 9, caractérisée en ce que le dispositif d'affichage peut être lu dans le sens de lecture (52) depuis le bord (51).

11. Carte mémoire selon l'une des revendications 5 à 10, caractérisée en ce que, selon le sens d'insertion de la carte mémoire dans le dispositif d'entrée (28), le sens des symboles présentés sur le dispositif d'affichage (48) est réversible de 180° sous la commande du logiciel.

12. Système de commutation programmable pour une carte mémoire selon l'une des revendications 1 à 11, en particulier un système de central privé ou un système de central personnel, comprenant les unités suivantes :
- au moins un dispositif d'entrée pour insérer la carte mémoire dans celui-ci et ayant des bornes de contact pour un bus de données, pour un bus d'adresses, et pour une tension d'alimentation destinée à la carte mémoire ;
- une unité centrale comprenant :
- un microprocesseur,
- une unité de commande commandée par le microprocesseur, et
- une mémoire de données connectée par le biais d'un bus de données au microprocesseur ou à l'unité de commande, et
- une pluralité de postes terminaux qui sont connectés par le biais d'un bus audio à l'unité centrale, et au moins un de ceux-ci est conçu comme ou comporte un dispositif de sortie vocale,
dans lequel, une fois la carte mémoire insérée, l'unité de commande fait en sorte que les données stockées dans la carte mémoire soient écrites dans la mémoire de données de l'unité centrale, ces données déterminant les caractéristiques de service du système de commutation,
caractérisé en ce que le dispositif d'entrée (28) a un contact connecté à un fil vocal du bus audio (40) et servant à établir un contact avec la ligne de sortie (9) de la carte mémoire (1) et un contact connecté à l'unité de commande (32) et servant à établir un contact avec la ligne de commande (5) de la carte mémoire (1), la ligne de commande étant connectée au générateur vocal (2), et en ce que, une fois la carte mémoire (1) insérée, les données stockées de la carte mémoire (1) sont lues, le système de commutation étant ainsi programmé de sorte qu'à la mise en marche d'un dispositif de sortie vocale ou d'un poste terminal (25, 26, 27) équipé d'un dispositif de sortie vocale, ou une fois que l'utilisateur a inséré un mot code, l'unité de commande (32) active le générateur vocal (2), qui émet des signaux vocaux analogiques sous la forme d'informations concernant l'utilisateur par le biais de la ligne de sortie (9) de la carte mémoire (1), le contact associé (10) et le fil vocal connecté (40,2) au dispositif de sortie vocale connecté (44).

13. Système de commutation selon la revendication 12, caractérisé en ce que les informations concernant l'utilisateur émises comportent une demande d'entrée d'un autre mot code et en ce qu'après l'entrée de l'autre mot code, l'unité de commande (32) fait en sorte que le générateur vocal (2) émette d'autres informations concernant l'utilisateur au dispositif de sortie vocale connecté (44).

14. Système de commutation selon la revendication 12 ou 13, caractérisé en ce que le programme ou l'un des programmes stockés dans la mémoire de texte (3) ou la mémoire de données (14, 15, 16) de la carte mémoire contenant le générateur vocal (2) contient des données pour les caractéristiques de service nécessaires et/ou des caractéristiques de service supplémentaires du système de commutation.

15. Système de commutation selon l'une des revendications 12 à 14, caractérisé en ce que le dispositif d'entrée (28) est intégré dans l'unité centrale (24) du système ou contenu dans un dispositif périphérique (28,1) connecté électriquement à ladite unité centrale.

16. Système de commutation selon l'une des revendications 12 à 14, caractérisé en ce que le dispositif d'entrée (28,2) est intégré dans un poste terminal (26) ou est un dispositif périphérique (28,3) connecté électriquement à un poste terminal (27).

17. Système de commutation selon l'une des revendications 12 à 16, caractérisé en ce qu'il est un central privé ayant au moins un port (29) pour une jonction avec un central local et/ou un autre central privé.
